# EUROPÄISCHE PATENTANMELDUNG

(11) **EP 4 834 712 A1**
(43) Veröffentlichungstag der Anmeldung: **04.11.2026**
(21) Anmeldenummer: 25173070.1
(22) Anmeldetag: 29.04.2025
(51) Int. Cl.: B62D 1/26

(54) **MECHANISCHES SPURFÜHRUNGSSYSTEM FÜR STRASSENKRAFTFAHRZEUGE**

(71) Anmelder: Friedrich, Johann, 82054 Sauerlach (DE)
(72) Erfinder: Friedrich, Johann, 82054 Sauerlach (DE)
(74) Vertreter: Straus, Alexander

(57) **Zusammenfassung**

Die Erfindung betrifft Spurführungssysteme für Straßenkraftfahrzeuge (1), insbesondere ein Spurführungssystem mit mechanischer Spurführung, sowie eine Spurführungsvorrichtung dafür und ein Straßenkraftfahrzeug (1) mit einer derartigen Spurführungsvorrichtung.Dabei umfasst die Spurführungsvorrichtung eine drehbare Stellachse (4) mit mindestens zwei an der Stellachse (4) angebrachten Eingriffseinrichtungen (5), die vom Zentrum der Stellachse (4) lateral beabstandet und um einen vorbestimmten Winkel versetzt vorgesehen sind.

## Beschreibung

### HINTERGRUND DER ERFINDUNG

### 1. Technisches Gebiet

Die vorliegende Erfindung betrifft Spurführungssysteme für Straßenfahrzeuge, insbesondere ein Spurführungssystem mit mechanischer Spurführung, sowie eine Spurführungsvorrichtung dafür und ein Straßenkraftfahrzeug mit einer derartigen Spurführungsvorrichtung.

### 2. Stand der Technik

Der zunehmende Individual-Verkehr auf Straßen und die damit einhergehende steigende Verkehrsdichte führt wiederholt und vermehrt zu Staus, was negative Auswirkungen auf die Umwelt und die Effizienz des Transportwegs Straße hat. Um den Verkehrsfluss zu verbessern, werden Lösungen zur Verbesserung der technischen Infrastruktur gesucht.

In vielen Kraftfahrzeugen werden bereits heute Verkehrsleitsysteme genutzt, wobei im Kraftfahrzeug verbaute GPS-Systeme Verkehrs-Daten einer in den GPS-Systemen verarbeiteten Umgebung erhält, so dass bei Feststellung eines Hindernisses, die ein Fortkommen beeinträchtigen würde, wie beispielsweise ein Stau oder ein Unfall, eine Umfahrung einer beabsichtigten Route vorgeschlagen werden kann. Obwohl derartige Systeme eine Hilfe darstellen, eine bereits bestehende Verkehrsstörung nicht weiter anwachsen zu lassen, kann dadurch eine staufreie Erhöhung der Verkehrsdichte nicht erreicht werden.

Eine weitere Möglichkeit zur Handhabung einer steigenden Verkehrsdichte besteht in der Entwicklung autonomen Fahrens, bei dem ein Computer zumindest teilweise die eigenständige Führung des Straßenfahrzeugs übernimmt. Dabei wird das Straßenfahrzeug von *"on board"* verbauten Systemen basierend auf offline oder online vorliegenden Informationen über das Straßennetz, der beabsichtigten Route und der Verkehrsdichte auf der Route zum Ziel geführt. Nach Wunsch können zudem Verkehrsleitstellen in die Geschwindigkeit des Fahrzeugs oder den Abstand zu vorderen Fahrzeugen usw. eingreifen, um die Verkehrsdichte ohne Staugefahr zu steigern.

Obwohl derartige Systeme die Verkehrsdichte erhöhen können, ist diese jedoch auf das bestehende Straßennetz beschränkt.

Autonomes Fahren ist jedoch auch dahingehend mit Nachteilen behaftet, da dieses ausschließlich auf einer Drahtlosverbindung mit Verkehrsleitstellen beruht, welche Störungen unterliegen kann.

Die EP3971348 A1 schlägt zur Entlastung von bestehenden Straßennetzen vor, den Individual-verkehr auf Schienen-Trassen zu verlegen. Dabei werden die Schienen so mit Fahrbahnbalken versehen werden, dass sie für autonome Fahrzeuge ein Fahrbahnnetz ohne Weichen, Ampeln und Kreuzungen bilden und diese mit Straßen verbunden werden, dass Zufahrten und Abfahrten gebildet werden. Der Verkehr auf den so genutzten Schienen-Trassen wird von einer zentralen Verkehrsleitstelle gesteuert, so dass eine hohe Verkehrsdichte der autonomen Fahrzeuge ohne Bildung von Staus erreicht wird.

Eine Aufgabe der vorliegenden Erfindung besteht darin, ein Führungssystem für Kraftfahrzeuge bereitzustellen, das auch auf Straßen eingesetzt werden kann und mit dem Nachteile des Standes der Technik behoben werden.

### ZUSAMMENFASSUNG DER ERFINDUNG

Um die vorstehende Aufgabe zu lösen, wird eine mechanische Spurführungsvorrichtung für Straßenkraftfahrzeuge bereitgestellt, welche eine mit dem Straßenkraftfahrzeug drehbar verbindbare Stellachse und mindestens zwei daran von einem Mittelteil davon beabstandet angebrachte Eingriffseinrichtungen umfasst. Die Eingriffseinrichtungen sind bemessen und ausgestaltet ausgehend von einem Straßenkraftfahrzeug während der Fahrt in auf einer Fahrbahn vorgesehenen Führungsschienen einzugreifen und die dadurch ausgeübten Führungskräfte auf eine Lenkung des Straßenkraftfahrzeugs zu übertragen. Die entlang der Längsachse der Stellachse an abgewandten Bereichen davon angebrachten Eingriffseinrichtungen sind winklig versetzt vorgesehen, so dass beim Drehen der Stellachse nur eine der Eingriffseinrichtungen in eine auf der Fahrbahn vorgesehene Spurführungsschiene eingreift.

Die Erfindung betrifft weiter ein System zur mechanischen Führung von Straßenkraftfahrzeugen auf einer Fahrbahn, auf der mindestens zwei Führungsschienen in Längsrichtung der Fahrbahn und von der Mitte der Fahrbahn um eine Entfernung beabstandet vorgesehen sind. Das System umfasst weiter Straßenkraftfahrzeuge, die so bemessen sind, dass sie sich auf der Fahrbahn ausweichfrei passieren können und die eine erfindungsgemäße Spurführungsvorrichtung aufweisen.

Ferner betrifft die Erfindung ein Verfahren zur Verkehrssteuerung, bei dem ein hier beschriebenes System zusammen mit einer zentralen Verkehrssteuerung, über die Verkehrsdaten an die Straßenkraftfahrzeuge übermittelt werden, verwendet wird, um die Verkehrsdichte zu optimieren.

### KURZE BESCHREIBUNG DER FIGUREN

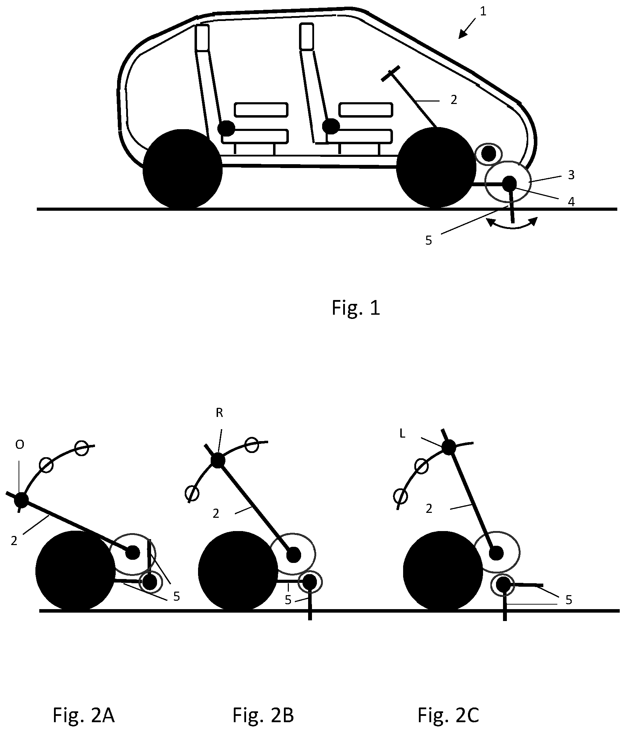

Figur 1 ist eine schematische Seitenansicht eines Straßenkraftfahrzeugs der vorliegenden Erfindung, die zeigt, wie eine Spurführungsvorrichtung in Spurführungseingriff mit der Spurführungsschiene steht.
Figur 2A-C sind schematische Seitenansichten einer Lenkungseinrichtung gemäß einer Ausführungsform mit mechanischer Stellungswahl der Spurführungsvorrichtungen, in welcher die verschiedenen Stellungen der Stellachse mit der linken und rechten Spurführungsvorrichtung dargestellt sind.
Figur 3 ist eine schematische Seitenansicht, einer Lenkungseinrichtung gemäß einer weiteren Ausführungsform mit automatischer Regelung der Spurführungsvorrichtungen mittels bordeigenem Navigationsrechner, in welcher die verschiedenen Stellungen der Stellachse mit der linken und rechten Spurführungsvorrichtung dargestellt sind.
Figur 4 ist eine schematische Ansicht eines Systems der vorliegenden Erfindung von oben, bei der ein Straßenkraftfahrzeug mittels Führungseingriff der Spurführungsvorrichtung in die rechte Spurführungsschiene aus einer Einmündung von rechts in eine Straße einfädelt.
Figur 5 ist eine schematische Ansicht eines Systems der vorliegenden Erfindung von oben, bei der ein Straßenkraftfahrzeug mittels Führungseingriff der Spurführungsvorrichtung in die rechte Spurführungsschiene von einer Hauptrichtung rechts abbiegt.
Figur 6 ist eine schematische Ansicht eines Systems der vorliegenden Erfindung von oben, bei der ein Straßenkraftfahrzeug mittels Führungseingriff der Spurführungsvorrichtung in die linke Spurführungsschiene an einer Abbiegung vorbeifährt und in der Hauptrichtung verbleibt.
Figur 7 ist eine schematische Darstellung eines kreuzungsfreien Abbiegeverkehrs.

### AUSFÜHRLICHE BESCHREIBUNG DER ERFINDUNG

### Spurführungsvorrichtung

Die Erfindung betrifft in ihrem weitesten Sinne eine mechanische Spurführungsvorrichtung für Straßenkraftfahrzeuge 1.

Die Spurführungsvorrichtung umfasst eine Stellachse 4, Eingriffseinrichtungen 5 und Mittel zur Drehung der Stellachse (Stelleinrichtung 3) durch einen Nutzer um deren Achse.

Die Stellachse 4 kann als massive Stange oder als Rohr ausgeführt sein, mit einem Querschnitt bzw. Durchmesser, der eine ausreichende Stabilität sicherstellt, auf die Stellachse 4 ausgeübte Kräfte ohne körperliche Veränderung der Stellachse 4 aufzunehmen. Um dies sicherzustellen wird die Stellachse 4 weiter aus Materialien gefertigt werden, wie beispielsweise aus Metall, oder Metalllegierungen, wie z.B. Stahl, die eine hohe körperliche strukturelle Festigkeit gewährleisten. Die Länge der Stellachse 4 ist im Allgemeinen so bemessen, dass sie im Wesentlichen der Breite des Straßenkraftfahrzeugs 1 entspricht, an das die Spurführungsvorrichtung angebracht wird. Die Länge ist jedoch so bemessen, dass die Stellachse 4 eine Entfernung von einer auf bzw. in einer Fahrbahn vorgesehenen Spurführungsschiene zu einer parallel dazu verlaufenden Spurführungsschiene auf der gleichen Fahrbahn überspannen kann. Wenn die Stellachse 4 eine derartige Länge nicht inhärent aufweist, beispielsweise bei einem gegenüber der Fahrbahnbreite schmalen Fahrzeug,
dann kann die Stellachse 4 an deren Enden verlängerbar bzw. einziehbar ausgestaltet werden, wie beispielsweise ausschwenkbar oder auch als Teleskopausführung.

Die Stellachse 4 weist mindestens zwei daran vorgesehene Eingriffseinrichtungen 5 auf, die als von dem Umfang der Stellachse 4 ausgestaltete Vorsprünge ausgebildet sind. Die Vorsprünge können röhren- oder klingenförmig ausgestaltet sein, mit gleichbleibenden oder auch sich verjüngendem Durchmesser bzw. Querschnitt. Diese sind wie die Stellachse 4 aus einem Material gefertigt, das geeignet ist, die bei der Spurführung auftretenden mechanische Kräfte ohne strukturelle Veränderung aufzunehmen und weiterzugeben. Sie können mit der Stellachse 4 einstückig ausgebildet oder darauf mittels jedes geeigneten Mittels fixiert sein, wie z.B. damit verschraubt.

Die Eingriffseinrichtungen 5 sind auf der Stellachse 4 von einem Mittelteil davon beabstandet, vorzugsweise benachbart zu den abgewandten Enden davon, und an der Umfangsfläche der Stellachse 4 winklig versetzt vorgesehen, wie beispielsweise um einen Winkel von mindestens 30°, vorzugsweise 45° oder 60° oder auch 90° versetzt. Die winklige Versetzung ermöglicht, dass bei einer Rotation bzw. Drehung der Stellachse 4 nur eine der mindestens zwei Eingriffseinrichtungen 5 in Richtung der Fahrbahn ausgerichtet werden kann, so dass diese mit einer an bzw. in der Fahrbahn vorgesehenen Spurführungsschiene in Eingriff kommt, während die andere der mindestens zwei Eingriffseinrichtungen 5 frei über der Fahrbahn verbleibt.

Dadurch wird eine doppelte Führung durch zwei parallele Schienen gleichzeitig ermöglicht. Dies hat den Vorteil, dass bei einer endenden Spurführungsschiene ein Übergang zu einer parallelen Schiene auf der anderen Fahrzeugseite möglich ist, ohne die Spurführung zeitweise zu beenden. Auf diese Art und Weise können Führungsübergänge zwischen beiden Führungsschienen geregelt werden.

Bei Vorliegen von mehr als zwei Eingriffseinrichtungen 5 ist auch eine winklige Anordnung umfasst, die ermöglicht, dass zwei Eingriffseinrichtungen 5 mit jeweils parallel verlaufenden Führungsschienen gleichzeitig in Eingriff kommen können. Dadurch wird eine zumindest zeitweise eingesetzte doppelte Führung durch zwei parallele Schienen gleichzeitig sichergestellt, was einen Übergang von einer Spurführungsschiene zu einer parallel verlaufenden Schiene auf der gleichen Fahrbahn ermöglicht, ohne die Spurführung beenden zu müssen. Auf diese Art und Weise können Führungsübergänge zwischen Führungsschienen, beispielsweise beim Abbiegen von einer Hauptfahrbahn geregelt werden.

Auch ist bei einer winkligen Versetzung wie oben beschrieben eine Position möglich, bei der keine der mindestens zwei Eingriffseinrichtungen 5 mit der Führungsschiene in Eingriff stehen, so dass ein Nutzer das Straßenkraftfahrzeug 1 aus der Spurführung nehmen kann, um die manuelle Kontrolle der Steuerung zu übernehmen.

Die Länge der Eingriffseinrichtungen 5 ist ausgestaltet, die Entfernung von der Höhe der Stellachse 4 über der Fahrbahn, wenn die Spurführungsvorrichtung an ein Straßenkraftfahrzeug 1 angebracht ist, bis in einen Eingriffsbereich in der Spurführungsschiene zu überspannen und einen Führungseingriff in der Spurführungsschiene zu erreichen.

Die Eingriffseinrichtungen 5 reichen vorzugsweise so weit in den Eingriffsbereich der Spurführungsschiene hinein, dass ein Pufferbereich vorliegt derart, dass bei Bodenwellen, seitlichen Schwankungen oder sonstigen Bewegungen des Fahrzeugs der Führungseingriff nicht verloren geht. Um einen konstanten Führungseingriff sicherzustellen, können die Eingriffseinrichtungen 5 weiter mit einem oder mehreren Elementen ausgestattet werden, die deren Länge vergrößert oder verkürzt, um eine weitere Anpassung an Unebenheiten in der Fahrbahn zu liefern und auch bei Schwankungen oder Bodenwellen oder sonstigen Bewegungen des Fahrzeugs den Führungseingriff sicherzustellen. Eine derartige Anpassung kann gleichermaßen dadurch erfolgen, dass die gesamte Spurführungsvorrichtung mit Mitteln ausgestattet ist, beispielsweise Feder- und/oder Gummielementen, die geeignet sind, die vorstehend aufgeführten Schwankungen auszugleichen.

Der Führungseingriff, d.h. der Kontakt zwischen der Spurführungsschiene und der Eingriffseinrichtung 5 kann auf jede geeignete und dem Fachmann bekannte Art und Weise implementiert werden, wie beispielsweise über Rollen oder schleifend. Ein schleifender Eingriff vereinfacht den Aufbau der Eingriffseinrichtung 5 bzw. der Spurführungsvorrichtung. Ein schleifender Kontakt kann darüber hinaus den Vorteil aufweisen, dass die Eingriffseinrichtungen 5 als Stromabnehmer dienen können, über das das Straßenkraftfahrzeug 1 nach Bedarf mit Energie versorgt werden kann. Dazu müssen die Führungsschienen selbst geeignet sein Strom zu leiten. Dazu müssen diese isoliert sein und können ferner beschichtet sein. Strom kann beispielsweise von oben, seitlich oder von unten abgenommen werden. Alternativ können zusätzlich Stromleitungen in den Führungsschienen vorgesehen werden. Es können wahlweise auch nur Abschnitte der Führungsschienen stromführend ausgestaltet sein, um einen Akku eines Straßenkraftfahrzeugs 1 währen der Fahrt zu laden.

Die Reibung des Führungseingriffs kann nach Bedarf durch Wälzläger reduziert werden. Das bedeutet, dass die Eingriffseinrichtungen 5 mindestens an dem distalen Ende davon um deren Achse drehbar sein können, damit nur auftretende Spurführungskräfte auf sie wirkt, die Gleitreibung jedoch zur Rollreibung umgewandelt wird. Das Wälzlager kann beispielsweise ein Kugellager oder ein Rollenlager sein. Dem Fachmann sind geeignete Mittel und Maßnahmen wohlbekannt, derartige Strukturen zu implementieren.

Gemäß einer Ausführungsform kann das Material der Eingriffseinrichtungen 5 zumindest in dem Bereich des Kontakts mit der Spurführungsschiene so gewählt sein, dass es weicher oder maximal gleich hart ist wie das der Spurführungsschiene selbst, so dass das Netzwerk der Führungsschienen vor Verschleiß geschont wird. Sollte das Netzwerk von Führungsschienen verschiedene Materialien der Führungsschienen aufweisen, kann das Material der Eingriffseinrichtungen 5 so gewählt sein, dass es weicher ist als das weichste Material der Führungsschienen.

Die Spurführungsvorrichtung umfasst weiter Mittel, mit der eine Drehung bzw. Rotation der Stellachse 4 durch einen Nutzer nach Wunsch ermöglicht wird. Dies kann über jede dem Fachmann bekannte Einrichtung erfolgen, wie beispielsweise einen mechanischen Hebel 2 oder eine elektronische Schaltung 6, mittels der ein elektrischer Stellmotor bzw. Servomotor angesteuert wird, um die Stellachse 4 zur Drehung/Rotation zu bringen. Übersetzungen von bereitgestellter Motorkraft auf die Stellachse 4, beispielweise mittels Zahnräder oder Riemen oder auch mittels hydraulischer oder pneumatischer Systeme können vorgesehen werden. Bei Anbringung an ein Straßenfahrzeug wird die Spurführungsvorrichtung ortsstabil, jedoch schwenkbar mit dem Straßenfahrzeug im unteren Bereich, vorzugsweise unterhalb des Bodenblechs und benachbart zur Vorderachse verbunden, so dass eine freie Rotation bzw. Drehbarkeit der Stellachse 4 gewährleistet ist. Die Längsachse der Stellachse 4 erstreckt sich dabei bei parallel zur Längsachse ausgerichteten Vorderrädern, d.h. bei einer theoretischen Geradeausfahrt des Straßenkraftfahrzeugs 1 im Wesentlichen quer zur Fahrtrichtung des Straßenfahrzeugs.

Die Spurführungsvorrichtung ist ausgestaltet, mit der Lenkung des Straßenkraftfahrzeugs 1 gekoppelt zu werden, derart, dass eine durch die Spurführungsschienen auf die Eingriffseinrichtungen 5 ausgeübte Spurführungskraft über die Stellachse 4 auf die Lenkung wirkt, so dass die Lenkachsenräder bzw. - reifen des Straßenkraftfahrzeugs 1 der Kurvenführung bzw. winkligen Versetzung der Spurführungsschienen bzw. der Fahrbahn folgen.

Gemäß einer Ausführungsform wirkt die gesamte Spurführungsvorrichtung direkt mechanisch auf die im Straßenkraftfahrzeug 1 verbaute Lenkung, ggf. übersetzt mittels Zahnräder oder geeigneter Übersetzungen, um der Größe und Breite des betreffenden Straßenkraftfahrzeugs 1 Rechnung zu tragen, so dass bei einer Schwenkung der Stellachse 4, hervorgerufen durch einen Kurvenverlauf der Spurführungsschiene und die Eingriffseinrichtungen, um einen Mittelpunkt davon, eine ausreichende und entsprechende Verstellung der Lenkräder zu erreichen, so dass das Straßenkraftfahrzeug 1 dem Fahrbahnverlauf folgt. In einer weiteren Ausführungsform kann ein elektro-mechanischer Wandler vorgesehen sein, mit dem die Auslenkung/das Verschwenken der Stellachse 4 in ein elektrisches Signal umgewandelt wird, das nach Berechnung/Anpassung in ein Lenksignal umgewandelt wird.

Die hier beschriebene Spurführungsvorrichtung ist ausgestaltet durch mechanische Kraftübermittlung einer lateralen Auslenkungskraft die Fahrtrichtung eines Fahrzeugs entlang einer Spurführungsschiene zu steuern. Dazu greift die am Straßenkraftfahrzeug 1 angebrachte Spurführungsvorrichtung über die Eingriffseinrichtungen 5 in mindestens eine auf bzw. in der Fahrbahn vorgesehene Spurführungsschiene ein, und nimmt über diese die bei einem Kurvenverlauf oder ähnlichem auftretende laterale Auslenkung auf, um diese an bzw. auf die Lenkung zu übertragen. Wahlweise kann die mechanische Spurführung mittels Kraftübermittlung durch kontaktlose Spurhaltungsmittel ergänzt werden. Zu diesem Zweck sind an der Spurführungsvorrichtung Sensoren vorzusehen, die die Position des Sensors, der Führungseinrichtung oder des Fahrzeugs über der Führungsschiene erfassen und Führungsinformationen an die Lenkung des Fahrzeugs übermitteln, so dass das Fahrzeug der Richtung der Führungsschiene mit einer reduzierten mechanischen Kraftübermittlung über die mechanische Spurführung folgen kann und/oder die mechanische Spurführung nur als Ausgleich einer eventuellen Übersteuerung dient.

Die Spurführungsschiene wird daher nicht von dem Straßenkraftfahrzeug 1 mit einem wesentlichen Anteil dessen Masse beaufschlagt, wie dies beispielsweise bei Schienenfahrzeugen der Fall ist. Dies hat unter anderem den Vorteil, dass die auf bzw. in der Fahrbahn vorgesehene Spurführungsschiene nicht den Kräften standhalten muss, die Gleise für Schienenfahrzeuge erfahren. Die Straßenkraftfahrzeuge 1 belasten im Wesentlichen den Fahrbahnbelag des Fahrstreifens.

Eine Spurführungsschiene verläuft im Wesentlichen längs des Fahrstreifens, also in Longitudinalrichtung, so dass das Straßenkraftfahrzeug 1 während der Fahrt permanent von der Spurführungsschiene begleitet bzw. geführt wird. Die Spurführungsschiene ist vorzugsweise als longitudinale Vertiefung bzw. Längsrille entlang der Fahrtrichtung im Straßenbelag eingelassen. Die Spurführungsschiene kann als Längsrille ausgestaltet sein, gefertigt aus Beton oder Metall. Sie kann auch durch Kantensteine geformt sein. Darüber hinaus kann die Längsrille mit allen Materialien verstärkt sein, die die Rille gegen Verformung durch überfahrenden Straßenverkehr oder durch andere äußere Erosionsfaktoren schützen und/oder stabil halten. Die Tiefe der Rille liegt vorzugsweise in einem Bereich von 5-15 cm, beispielsweise 6, 7, 8, 9, 10, 11, 12, 13 oder 14 cm.

Die Spurführungsschiene kann auch auf dem Fahrstreifen aufliegend und als Paar LängsStreifen bzw. -Balken mit einer dazwischen liegenden Vertiefung ausgestaltet sein. Die Streifen bzw. Balken sind vorzugsweise so flach ausgebildet, dass herkömmliche Fahrzeuge über diese ohne größere Probleme hinüberfahren können, jedoch ausreichend hoch, dass ein ausreichender Eingriff durch die Eingriffseinrichtungen 5 erfolgen kann und eine Spurführungskraft auf diese ausgeübt wird. Die Spurführungsschiene ist vorzugsweise aus Metall ausgebildet. Die Streifen bzw. Balken weisen vorzugsweise eine Höhe zwischen 5-10 cm auf, beispielsweise 6, 7, 8, 9 cm.

Die Spurführungsschiene kann mit einem T-Profil ausgeführt sein. Dadurch können an der Spurführungsvorrichtung anschlagende/stoppende Mittel angebracht werden, um eine Befestigung auf der Fahrbahn zu erleichtern.

Die Spurführungsschiene kann an einem Fahrstreifen an jeder gewünschten Stelle quer zur Fahrbahn vorgesehen sein, beispielsweise in der Nähe des seitlichen Randes oder im Bereich der Mitte oder in der Nähe des Mittelstreifens. Bei Vorhandensein mehrerer Führungsschienen auf einem Fahrstreifen können parallel verlaufende Führungsschienen an unterschiedlichen Stellen, d.h. in Nähe des seitlichen Randes oder im Bereich der Mitte oder in der Nähe des linken Rands vorgesehen werden, die nach Wunsch an bestimmten Stellen durch Abzweigungen ineinander übergehen.

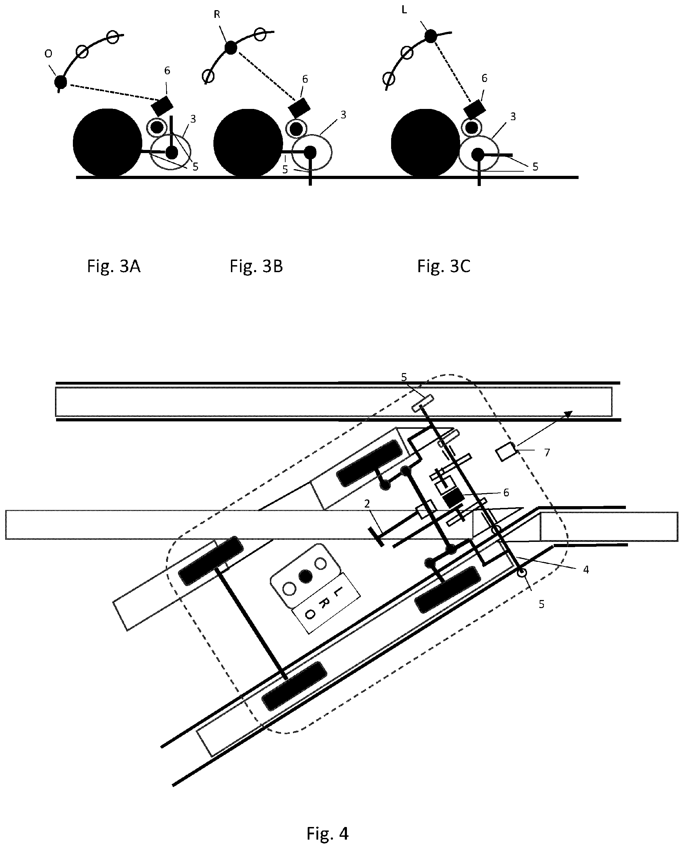

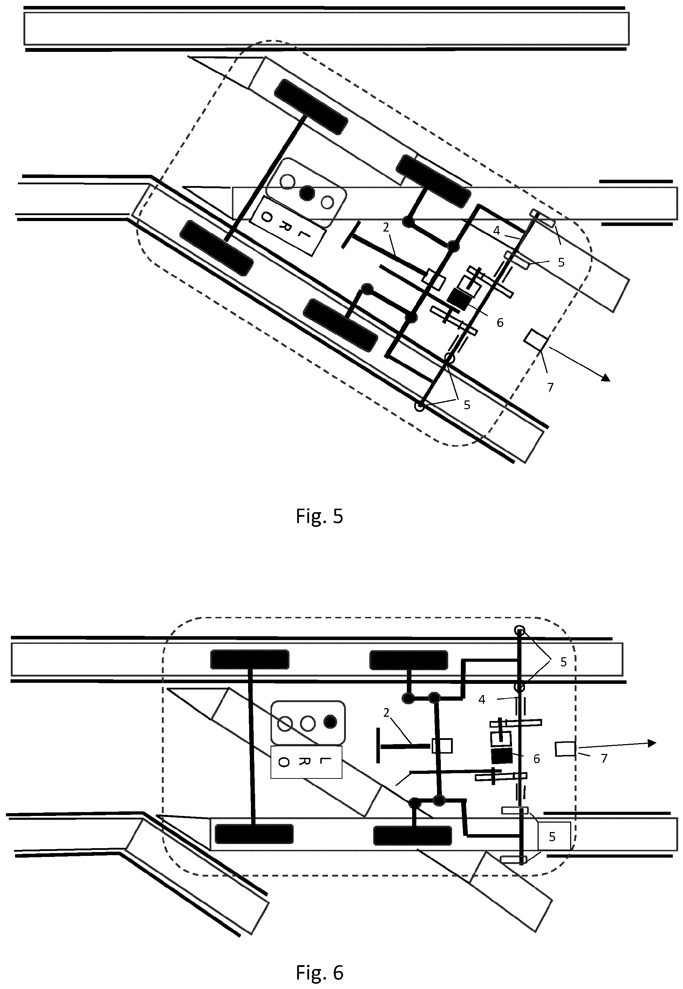

Die Figuren 4 - 6 zeigen Abbiege- bzw. Einmündungsvorgänge mit einem Straßenkraftfahrzeug 1. In Figur 4 biegt ein Straßenkraftfahrzeug 1 aus einer Seitenstraße (Fahrtrichtung siehe Pfeil) auf eine weitere Straße, als Hauptstraße bezeichnet, wobei der Führungseingriff mit der rechten Eingriffseinrichtung 5 in der rechten Spurführungsschiene vorliegt, die das Straßenkraftfahrzeug 1 durch die Kurve in die Fahrtrichtung der Hauptstraße führt. Die linke Eingriffseinrichtung 5 steht nicht in Führungseingriff. In Figur 5 biegt ein Straßenkraftfahrzeug 1 an einer Abzweigung von einer Hauptstraße in eine Seitenstraße, wobei ebenso die rechte Eingriffseinrichtung 5 und nicht die linke Eingriffseinrichtung 5 in Führungseingriff in der rechten Spurführungsschiene steht. In Figur 6 fährt ein Straßenkraftfahrzeug 1 an einer Abzweigung über diese Abzweigung hinweg und verbleibt auf der Hauptstraße (Fahrtrichtung siehe Pfeil). Dabei steht die linke Eingriffseinrichtung 5 in Führungseingriff mit der linken Spurführungsschiene, während die rechte Eingriffseinrichtung 5 außer Eingriff steht.

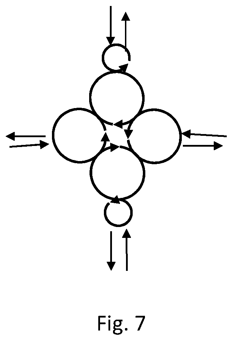

Wie in Figur 7 gezeigt, können die Führungsschienen auf Kreuzungen so angeordnet sein, dass ein ampelfreier Kreuzungsverkehr gewährleistet ist. Die Pfeile zeigen die mögliche Fahrtrichtung des gesamten Kreuzungsverkehrs auf. Jeder der Kreisverkehre hat nur eine Fahrtrichtung, sodass an Kontaktstellen der Kreisverkehre nur eine Einfahrtsrichtung in den angrenzenden Kreisverkehr möglich ist. Ausfahren aus jedem der Kreisverkehre ist in die entsprechenden Abfahrten möglich, sodass die Fahrtrichtung über die ampelfreie Kreuzung in jede Richtung wählbar ist.

Die vorliegende Erfindung betrifft weiter ein Straßenkraftfahrzeug 1 das eine vorstehend beschriebene Spurführungsvorrichtung umfasst. Das Straßenkraftfahrzeug 1 kann weiter einen bordeigenen Navigationsrechner aufweisen, mit dem die Stellmechanik der Spurführungsvorrichtung angesteuert werden kann, um die Stellachse 4 zur Drehung zu veranlassen und die Eingriffseinrichtung 5 der Spurführungsvorrichtung wählbar in Eingriff mit den Führungsschienen zu bringen. Der Navigationsrechner erhält wahlweise Spurführungsinformationen, um die Lenkung zu steuern, wenn die Spurführungsvorrichtung nicht direkt mechanisch mit der Lenkung gekoppelt ist. Der Navigationsrechner erhält zudem Navigationsdaten, um das Straßenkraftfahrzeug 1 ohne Einfluss eines Fahrzeugführers zum gewählten Ziel zu bringen.

Die Breite von Straßen in Europa ist nationaler oder europäischer Gesetzgebung unterworfen, um eine Befahrbarkeit für übliche Fahrzeuge sicher zu gewährleisten. Dementsprechend gibt es auch nach nationalem bzw. europäischem Recht Maximalbreiten der für den Straßenverkehr zugelassenen Fahrzeuge. Die Maximalbreite von für den Straßenverkehr zugelassenen Fahrzeugen darf für gewöhnlich 2,55 m nicht überschreiten, wovon nur seltene Ausnahmen vorgesehen sind.

Einspurige Fahrstreifen weisen daher oft eine Regelbreite auf, die in einem Bereich zwischen 2,75 m und 3,75 m liegt, um so auch ein Befahren durch Fahrzeuge mit Maximalbreite zu gewährleisten. Dies können beispielsweise Breiten von 2,75 m, 3,0 m, 3,50 m oder 3,75 m sein. Es kann ein Seitenabschnitt zum Straßenrand von der Regelbreite für den Rinnstein vorgesehen sein oder eine entsprechende zusätzliche Breite für den Rinnstein, beispielsweise von 25 cm (0,25 m), kann hinzukommen. Es können zudem spezielle Fahrbahnen vorgesehen sein, die an den maximalen Breiten der Fahrzeuge für dieses System bemessen sind und daher nur für diese Fahrzeuge und keine Kfz regulärer Breite befahrbar sind. Die Fahrbahnen können wegen der präzisen Spurhaltung auch nur auf zwei schmale Fahrbahnbalken reduziert sein, die mit der Position der Räder/Reifen des Fahrzeugs unter dem Fahrzeug korrespondieren, sodass das Fahrzeug auf nur zwei Fahrbahnbalken fährt. Diese können wahlweise zusammen mit der Führungsschiene derart aufgeständert sein, dass diese Hindernisse, Engstellen oder sonstige Gegebenheiten überwinden oder umgehen können, wo eine normale Fahrbahn nicht zweckmäßig angelegt werden kann.

Das hier beschriebene System einer mechanischen Spurführung für Straßenkraftfahrzeuge 1 kann auf bestehenden einspurigen oder mehrspurigen Fahrbahnen vorgesehen werden, dies in einer oder beiden Richtungen (d.h. auch der Gegenrichtung). Dabei kann jeweils nur einer, mehrere oder alle Fahrstreifen in das System einbezogen sein. In Bereichen mit Kreuzungen und/oder Abzweigungen können neben einer beispielsweise am rechten Fahrbahnrand generell vorgesehenen Spurführungsschiene am linken Fahrbahnrand eine neue Spurführungsschiene vorgesehen sein, über die ein geführtes Abbiegen ermöglicht wird, dies beispielsweise, ohne darauf beschränkt zu sein, durch gleichzeitiges Eingreifen von zwei Eingriffseinrichtungen, Lösen des Eingriffselements an der Spurführungsschiene am rechten Fahrbahnrand, Führen des Straßenkraftfahrzeugs 1 üb er die von der Hauptfahrb ahn ab b iegende,am linken Fahrbahnrand vorgesehene Spurführungsschiene und nach Erreichen einer weiteren Hauptfahrbahn Eingreifen von zwei Eingriffseinrichtungen in die jeweiligen Spurführungsschienen am rechten und linken Fahrb ahnrand und anschließend Anheb en des Eingriffselements für die Spurführungsschiene am linken Fahrb ahnrand und Weiterfahren durch Führung über den Eingriff des Eingriffselements in die Spurführungsschiene am rechten Fahrbahnrand.

Das System bietet durch Anordnen der Spurführungsschienen und Steuerung üb er eine zentrale oder auch dezentrale Verkehrssteuerung zudem die Möglichkeit eines ampelfreien Kreuzungsverkehrs, wodurch ampelgesteuerter Stopp-and-Go-Verkehr vermieden wird. Zudem kann das System mit der Lehre der im Stand der Technik erwähnten EP3971348 A1 zur teilweisen Verlegung von Individualverkehr auf Schienen-Trassen gekoppelt werden. Gemäß einer Ausführungsform können auf einer Fahrbahn auch mindestens zwei Spurführungsschienen vorgesehen werden, jeweils am rechten und am linken Fahrbahnrand, wobei die Breite der Straßenkraftfahrzeuge 1 so gewählt wird, dass diese aneinander vorbeifahren können. Da die Fahrzeuge vorzugsweise im Vergleich zu normalen Kfz schmal sind, können sie vorteilhafterweise ferner eine Neigeeinrichtung aufweisen, um Fliehkräfte und/oder Seitenwind auszugleichen.

Die Erfindung betrifft weiter ein Verfahren zur Verkehrssteuerung, um eine bessere Straßenverkehrswirtschaftsflächen-Nutzung zu erreichen umfassend den Einsatz eines zentralen Verkehrssteuerungsrechners, der Verkehrsdaten an einen in Fahrzeugen verbauten Navigations-Rechner übermittelt, um Straßenkraftfahrzeuge 1 optimal zu steuern.

Dabei ist vorteilhaft, wenn durch die Verwendung des Systems in dem Verfahren eine gesetzlich vorgeschriebene Abstandshaltung verringert werden kann. Dazu sind die Straßenkraftfahrzeuge 1 des Systems mit mechanischen oder elektronischen Abstandshaltungseinrichtungen 7 versehen. Eine elektronische Abstandshaltungsvorrichtung 7 zum vorausfahrenden Straßenkraftfahrzeug 1 kann beispielsweise mittels Ultraschall-, Infrarot- oder RADAR-Verfahren erfolgen.

Dem Fachmann werden angesichts der nachstehenden ausführlichen Beschreibung Varianten und Abwandlungen der Erfindung offenbar. Die ausführliche Beschreibung soll den Gegenstand der Erfindung jedoch nicht einschränken, sondern nur beispielhaft verständlich machen. Der beanspruchte Gegenstand sei allein durch die nachstehenden Ansprüche definiert.

## Patentansprüche

1. Spurführungsvorrichtung zur mechanischen Führung von Straßenkraftfahrzeugen (1) auf einer Fahrbahn, worin die Spurführungsvorrichtung umfasst:
mindestens eine drehbare Stellachse (4),
mindestens zwei an der Stellachse (4) angebrachte Eingriffseinrichtungen (5), die von dem Zentrum der Stellachse (4) lateral beabstandet und um einen vorbestimmten Winkel versetzt vorgesehen sind, und
eine Stelleinrichtung (3), mit der die Stellachse (4) gedreht werden kann,
worin die Spurführungsvorrichtung ausgestaltet ist, mit der Lenkung des Straßenkraftfahrzeugs (1) gekoppelt zu werden, wobei die Stellachse (4) an dem Straßenkraftfahrzeug (1) im Wesentlichen senkrecht zur Fahrrichtung angebracht ist, worin die Spurführungsvorrichtung ausgestaltet ist, Spurführungskräfte von an der Fahrbahn vorgesehenen Führungsschienen über die Eingriffseinrichtungen (5) mechanisch abzunehmen und an die Lenkung des Straßenkraftfahrzeugs (1) zu übertragen,
wobei durch Drehen der Stellachse (4) mindestens eine der Eingriffseinrichtungen (5) mit einer Spurführungsschiene in Eingriff gebracht werden kann, um das Straßenkraftfahrzeug 1 zu führen.

2. Spurführungsvorrichtung nach Anspruch 1, worin die Stellachse (4) im Wesentlichen unter dem Fahrzeugboden und benachbart zu einer entsprechenden lenkbaren Achse des Fahrzeugs vorgesehen ist.

3. Spurführungsvorrichtung nach Anspruch 1 oder 2, worin die Eingriffseinrichtungen (5) im Wesentlichen an abgewandten Enden der Stellachse (4) vorgesehen sind.

4. Spurführungsvorrichtung nach einem der vorstehenden Ansprüche, worin die Eingriffseinrichtungen (5) an der Stellachse (4) um einen Winkel von mindestens 30° oder mindestens 45° versetzt angebracht sind.

5. Spurführungsvorrichtung nach einem der vorstehenden Ansprüche, worin die Stelleinrichtung mechanisch und/oder elektronisch betätigt wird.

6. Spurführungsvorrichtung nach einem der vorstehenden Ansprüche,
welche mit der Lenkung des Fahrzeugs mechanisch gekoppelt ist; und/oder
welche weiter einen elektro-mechanischen Wandler aufweist und über diesen mit der Lenkung des Fahrzeugs elektrisch verbunden ist.

7. System zur mechanischen Spurführung von Straßenkraftfahrzeugen (1), welches umfasst:
mindestens eine Fahrbahn;
mindestens eine Führungsschiene, die entlang der Längsrichtung der Fahrbahn vorgesehen ist,
mindestens ein Straßenkraftfahrzeug, das mindestens eine Spurführungsvorrichtung nach einem der Ansprüche 1-6 aufweist.

8. System zur mechanischen Spurführung von Straßenkraftfahrzeugen (1), welches umfasst:
mindestens eine Fahrbahn;
mindestens zwei Führungsschienen, die in Längsrichtung der Fahrbahn und von der Mitte der Fahrbahn um eine Entfernung beabstandet vorgesehen sind,
mindestens zwei Straßenkraftfahrzeuge, die so bemessen sind, dass sie sich auf der Fahrbahn ausweichfrei passieren können,
worin jedes Straßenkraftfahrzeug (1) mindestens eine Spurführungsvorrichtung nach einem der Ansprüche 1-6 aufweist.

9. System nach einem der Ansprüche 7 oder 8, worin die Führungsschienen als Balken und/oder als Rillen auf der Fahrbahn ausgebildet sind; und/oder im Wesentlichen keine Traglast des Straßenkraftfahrzeugs (1) aufnehmen; und/oder auf Kreuzungen in ampelfreiem Kreuzungsverkehr angeordnet sind; und/oder Einrichtungen zum Leiten und Liefern von Strom umfassen.

10. System nach einem der Ansprüche 7-9, worin die Spurführungsvorrichtung mit den Eingriffseinrichtungen (5) weiter Einrichtungen zum Abnehmen von Strom umfassen, und die Führungsschienen geeignet sind Strom zu leiten, um das Straßenkraftfahrzeug (1) mit Energie zu versorgen.

11. System nach einem der Ansprüche 7-10, worin die Straßenkraftfahrzeuge (1) eine Abstandshaltungsvorrichtung (7) aufweisen, um einen bestimmten Abstand zum vorausfahrenden Straßenkraftfahrzeug einzuhalten.

12. Straßenkraftfahrzeug (1) mit einer Spurführungsvorrichtung nach einem der Ansprüche 1-6, welches geeignet ist zur Verwendung in einem System nach einem der Ansprüche 7-11.

13. Verfahren zur Verkehrssteuerung, welches ein System nach einem der Ansprüche 7-11 und eine zentrale Verkehrssteuerung umfasst, über die Verkehrsdaten an die Straßenkraftfahrzeuge (1) übermittelt werden, um die Verkehrsdichte zu optimieren.
